# EUROPEAN PATENT APPLICATION

(11) **EP 1 187 238 A1**
(43) Date of publication of application: **13.03.2002**
(21) Application number: 00307784.9
(22) Date of filing: 08.09.2000
(51) Int. Cl.: H01M 4/62, H01M 2/16

(54) **Battery element containing metal control additives**

(71) Applicant: ENSCI, INC., Pismo Beach, CA 93448 (US); Clough, Thomas J., Grover Beach, CA 93433 (US)
(72) Inventor: Clough, Thomas J., Grover Beach, California 93433 (US); McGarvey, Frank X., Cherry Hill, New Jersey (US)
(74) Representative: Colmer, Stephen Gary

(57) **Abstract**

A battery element of a lead acid battery including a negative plate, a positive and a separator having a porous organic polymer additive having phosphonic functionality in the negative plate and/or separator to improve life of the battery. A macroporous possity enhancing additive (e.g. distomite) is also present in the negative active material.

## Description

### Technical Field

The present invention relates to improved lead acid battery elements containing certain metal impurity inhibiting macroporous organic polymeric additives which are added to the active material particularly the negative active material and/or a battery separator to inhibit the detrimental effects of certain metals on the efficiency of a lead acid battery, particularly the negative plate battery element and to the synergy with porosity enhancing additives that enhance the performance of the metal impurity inhibiting additives in the negative plate.

Further, the present invention relates to the use of an expander functioning amount of an organic polymer additive having phosphonic functional groups in the negative plate of a lead acid battery alone or in combination with a sulfonic organic expander.

### Background ART

Metal impurities can be introduced into a lead acid battery through the use of many of the materials used in the manufacture of the battery. For example, metal impurities can be introduced in the lead and leady oxides used in the manufacture of the active material, the materials of construction including the lead grids, alloying agents, electrolyte and water. Nearly all metallic impurities, if they are nobler than lead, have a smaller hydrogen overvoltage than pure lead. Therefore, they increase hydrogen evolution even if they are deposited in minute concentrations on the surface of the negative plates. These metals cause a continued gas evolution even after charging is completed. Hydrogen is evolved on the deposited metal with low hydrogen overvoltage, which can be short-circuited with lead. The effect of metal on the gassing particularly postcharge gassing decreases in the following sequence: Pt,Au, Te, Ni, Co, Fe, Cu, Sb, Ag, Bi and Sn. The presence of 0.3 ppm of platinum in the acid can cause a doubling of the self-discharge rate. Tin can produce this effect at 0.1 wt%. Freshly deposited antimony is especially active. Besides the discharge of the negative plates with concomitant hydrogen evolution, these materials also move the end of charge voltage of the negative plates toward more positive values. The hydrogen evolution increases with rising acid density. Because the hydrogen overvoltage decreases with temperature, the self-discharge increases.

In addition, antimony is often added to grid lead in order to make the lead more fluid and more easily cast into the shapes necessary for storage battery grids. Further, it also hardens the resulting casting so that it can be further processed in the plant without damage. In certain battery applications, it may be necessary for the battery to withstand extreme resistance to corrosion of positive plate grids. In that event, higher antimony contents typically within the range of 4.5 to 6 wt percent are incorporated into the grid to form a lead antimony alloy. Antimony in these concentrations are generally only used in positive grids particularly grids intended for corrosion resistant batteries. Corrosion resistance typically means the ability to withstand the destructive effects of excessive charge or overcharge.

Antimony in the grid metal produces a definite effect on the charge voltage characteristics of the fully charged wet battery. The higher the antimony percentage in the grid metal, the lower the charge voltage and conversely, as the antimony is decreased so the charge voltage increases until pure lead is attained, which produces the highest voltage on charge.

Contaminant metals, hereinafter referred to as metal impurities including antimony from the positive grids, during service life, slowly goes into solution in the sulfuric acid electrolyte and from there it is believed to electroplate onto the surface of the negative plates. Once there, it acts as an additional electrode with the grid and the lead active material of the negative plates. This combination creates local action, promoting self-discharge and contributes to poor wet battery shelf life. In addition, the battery's charge voltage slowly decreases during life and, in the voltage regulated electrical charge circuit, the difference between the two becomes greater. The charger is set at a voltage just slightly higher than the normal charge voltage of the battery. Thus, the charger is able to restore electrical energy to the battery, as needed, to keep it charged. With metal deposition and the lowering of the battery voltage, the charger output into the battery increases as an overcharge, which reduces the life of the battery in service, until failure occurs. Therefore, it is very desirable to inhibit the detrimental effects of antimony on the negative plate.

### Disclosure of Invention

A new battery element which inhibits the detrimental effect of soluble metal impurity on the negative plate has been discovered. In brief, the battery elements include the addition of macroporous organic polymer having phosphonic functional groups with a preferential affinity for the metal impurity as a metal control additive, to the active material particularly the negative active material and/or the separator, which separates the positive and negative plates within a lead acid battery and which also can be a reservoir for sulfuric acid electrolyte.

Further, the battery elements include the synergistic addition of macroporous containing porosity enhancing additives to the negative plates of a lead acid battery to improve overall utilization of the metal control additive.

Further, the battery elements include the addition of an organic polymer additive having phosphonic groups associated with said polymer which functions as an expander in the negative active material alone or in combination with sulfonic organic expander in the negative active material to improve overall capacity maintenance.

### Best Mode For Carrying Out the Invention

In one broad aspect, the present battery elements comprise the addition of a macroporous organic polymer containing phosphonic functional groups with a preferential affinity for metal impurity to the negative active material and/or the separator, which separates the positive plates from the negative plates in a lead acid battery. In a preferred embodiment, the macroporous organic polymer allows the soluble metal impurity in the electrolyte to contact both the outer surface of the polymers and the internal surfaces created by the porosity of the organic polymer. These metal control additives are typically incorporated into the negative active material, and/or the separator in an amount sufficient to inhibit the detrimental effects of metal impurity on the negative plate.

Further, the present battery elements comprise the addition of an organic polymer containing phosphonic functional groups as an expander additive to the negative active material and optionally having at least one sulfonic organic expander component also present. In a preferred embodiment, the organic polymers are macroporous and have phosphonic functionality on both the outer surface and within the internal pore structure. The organic polymer expander additive functions together with at least one additive expander component present in the negative active material to improve overall battery capacity maintenance.

As set forth above, the present battery elements comprise the addition of the metal control additive having phosphonic functional groups with a preferential affinity for metal impurity, to the active material, particularly negative active material and/or the separator which separates the positive plates from the negative plates in a lead acid battery. The additives are macroporous, i.e. the porosity of the polymer allows the soluble metal impurity in the electrolyte to contact both the outer surface of the polymers and the internal surfaces created by the porosity of the organic polymers. The functional groups having a preferential affinity for metal impurity include both functional groups on the outer surface and internal surfaces in contact with soluble metal impurity in the electrolyte. The metal control additives are typically incorporated into the negative active material, and/or the separator in an amount sufficient to inhibit the detrimental effects of metal impurity on the negative plate.

In another broad aspect, the present battery elements comprise the addition of porosity additives to the negative plates in a lead acid battery together with the metal control additive. In a further preferred embodiment, the porosity additives have a reduced affinity for bonding with the active material in the negative plate.

As set forth above, such metal impurities can be introduced into the lead acid battery during manufacturing. In a number of battery designs, grid materials not having antimony as an alloying agent are used for battery manufacture. However, even in these types of batteries using nonantimony containing grids, antimony can be introduced as an impurity in the starting materials for battery manufacture including the starting lead and leady oxide type materials.

As set forth above, antimony which is present in the positive grid as an alloying agent can be oxidized and/or corroded to form a soluble antimony ion, which diffuses and/or migrates to the negative plate. Antimony ion from the positive grid can exist in cation form, i.e. a positive charge. It is believed that the form of the cation is dependent on the oxidation state of the antimony, i.e. +3 or +5, the molarity of the sulfuric acid and the battery voltage. For example, it is believed that antimony can exist as SbO2+ cation in the antimony +5 state and as Sb+3 or SbO+ cation in the antimony +3 state. These +3 anion forms are believed to exist when the molarity of the sulfuric acid is greater than one but may not exist at the fully recharged battery voltage. As set forth above, the sulfuric acid electrolyte participates in the discharge reactions taking place in the lead acid battery. Thus, the wt% sulfuric acid can decrease from 30-40 wt% sulfuric acid to from 10-14 wt% sulfuric acid depending on the type of battery design and the initial sulfuric acid concentration in the electrolyte. The amount of sulfuric acid remaining will be dependent on the percent of discharge of the battery with less sulfuric acid remaining when batteries are discharged to 80% or more.

The macroporous organic polymers having phosphonic functional groups with a preferential affinity for metal impurities inhibit the detrimental effects of soluble metal impurity on the negative plate. While the exact mechanism of inhibition is not known, it is believed that the metal impurity ion is bound by the functional group such as by the cation replacing the cation when the organic polymer contains cation functional groups. Although ion replacement is believed to be one mechanism for inhibiting the adverse effects of metal impurity ions, metal impurities can also form complexes and/or be solvated to inhibit the detrimental effect of metal impurities on the negative plate and such mechanisms are included in then the term inhibiting. One of the major discoveries of the battery elements of this invention is the inhibition of metal impurities over the varying sulfuric acid molarities and battery potentials (voltages) that occur during the charge discharge reactions in a lead acid battery. Further it has been discovered that the metal impurity which has been inhibited by the organic polymer additive is not substantially and detrimentally desorbed and/or released from the polymer under the sulfuric acid molarity and battery voltage conditions and changes in a lead acid battery. That is, the metal impurity inhibition continues during a plurality of charge/discharge reactions within the battery.

As set forth above, the metal control additives have a stronger binding and/or complex formation and/or solvation of metal impurity ions when compared to any intermediate soluble lead ions such as lead +2 which may be formed during the conversion of solid lead, solid lead peroxide to insoluble lead sulfate. As is known by those having skill within the lead acid battery art, additives should not introduce any substantial detrimental effects on battery performance.

In lead acid batteries an expander is added in small amounts to the negative active material and its primary function is to prevent the contraction and solidification of the spongy lead of the negative plate. The contraction, or the closing of the pores, in the negative plate can greatly reduce the capacity and the life of the negative plate and battery. Expanders are typically acid resistant materials, which are able to function in the presence of sulfuric acid electrolyte.

Expander packages typically consist of an intimate mixture of barium sulfate, carbon or lamp black and a sulfonic organic polymer typically a ligneous material often derived from wood. The expander promotes good battery performance, i.e., capacity maintenance, particularly in the areas of low temperature and high rate discharge capacity and for extended negative plate life. Although the exact mechanism of the expander has not been quantitatively determined, it is believed that each of the additives has certain functions in the negative plate. For example, it is believed that the lignin sulfonic acid, including its synthetically derived analogs, somehow changes the crystal growth of the lead sulfate during discharge so that the lead sulfate does not form a continuous film over the surface of the lead. It is believed that it allows for a discontinuous structure allowing for continued lead to contact sulfuric acid electrolyte for continued reaction and the production of electrical energy.

As set forth above, the surface of the spongy lead in the negative plate during discharge can be covered uniformly by the lead sulfate layer which has very limited solubility. As a result, an over saturated solution formed near the electrode surface with lead sulfate can pacifate the spongy lead during discharge and reduce the overall capacity of 30 the battery. The lead sulfate can deposit as a very impenetrable film that results in fusion or sintering of the negative active material. The function of the expander is to regenerate the essential pore structure and to prevent shrinkage responsible for the excessive capacity loss of the negative plate. One of the most important parts of the expander is the organic expander. The commercial expander of choice is a sulfonate derivative of lignin including such trade names as Vanisperse, Manisperse, Maracel, Lignosol, Reax, Vanine and Indulin. In general, the sulfonate derivatives of lignin and their synthetic organic anologs, have surfactant properties which allow the lignin derivative to be absorbed on the spongy lead as well as on the surface of the lead sulfate crystals formed during discharge. In both cases it is believed that the crystal growth is inhibited by the expander during the dissolutionprecipitation process. Without organic expander, the discharge process produces new centers of crystallization for lead sulfate on the free sites of the lead metal until all the surface is covered by a thick sulfate layer. It has been shown, that without an organic expander, particularly, for an example, the sulfonate derivatives of lignin or their equivalent, that the lead crystals become quite large in diameter, i.e. a coarsening which are covered by the lead sulfate product. The result on the negative plate is low capacity and poor cycle life. It is believed that the organic expander functions to allow the formation of smaller and more loosely packed lead crystals and that the morphology is changed. Thus, crystallization of the lead sulfate does not occur primarily on the lead metal, but on a layer of the organic lignosulfonate type particles and is more loosely connected with the lead surface, i.e., allowing continued reaction of the spongy lead during anodic discharge.

One of the problems associated with capacity maintenance of the negative plate in a lead acid battery, is the gradual deterioration of the organic expander, i.e., sulfonate derived lignins or their synthetic anologs, during the cycle life of the battery particularly at elevated temperatures. It is believed that the organic expander gradually solubilizes in the sulfuric acid electrolyte and is oxidatively degraded after solubilization. Further, it is believed that the initial acid resistant lignosulfonate can gradually be subjected to oxidative and thermal degradation, particularly in the presence of catalytically active metals. As set forth above, the pores of the negative plate can close and the specific surface area can decrease as the microstructure of the negative plate changes. It has been found that such changes occur more rapidly at higher temperatures such as from 40 to 80°C. Thus, temperatures as high as 80°C or even higher are being found in engine compartments for automobiles using lead acid starting batteries. It has been observed that the organic expander in contrast to the typical inorganic expander components, deteriorate more rapidly through the degradation process as the temperature increases. The deterioration of the organic expander results in a reduction in high rate capacity particularly at low temperature and capacity maintenance during the repetitive charge/discharge cycles over the life of the battery.

As set forth above, it has been found that the organic polymer expander additive containing phosphonic functional groups provide for improved capacity maintenance of the negative plate having negative active material with at least one additional expander component. Further, it has been found that the organic polymer expander additive, having phosphonic functional groups, improves the overall oxidative and/or thermal stability properties of the organic expander, for example, the sulfonate derived lignins or their synthetic analogs, particularly as the temperature of the battery environment increases. Further, the organic polymer expander additive having phosphonic functionality can replace all or part of the organic expander in an expander having barium sulfate, optionally with carbon.

As set forth above, the class of macroporous organic polymers of this invention have phosphonic functionality which has affinity for metal impurity. The metal impurity cation can displace the cation associated with the functional group, typically, the cation displaced can be hydrogen ion or, for example, sodium ion, preferably hydrogen. Typical examples of polymers containing the phosphonic acid and/or phosphonate functionality are those derived from polystyrene crosslinked divinylbenzene, phenolformaldehyde polymers and other like aromatic containing polymers.

The phosphonic organic polymers can have additional and different functional groups such as functional groups containing strongly acidic functionality such as sulphonic and phosphonic functionality on the same organic polymer. A particularly preferred functionality on the polymer is phosphonic acid and/or phosphonate here in referred to as phosphonic functionality. Typical examples of such functionality are:

-C-PO₃R , -C(PO₃R)₂ -N-R¹PO₃R

-N(R¹PO₃R)₂, -CH₂-N-R¹PO₃R

where R is typically hydrogen or sodium ion, preferably hydrogen and R¹ is alkylene, preferably about 1 to 3 carbon ions, preferably methylene.

In general the phosphonic functionality can be incorporated into the polymer matrix by chemical reaction including grafting of such functionality, on for example the crosslinked aromatic portion of polystyrene and/or phenolformaldehyde polymers. In addition, the functionality can be incorporated by the copolymerization of an unsaturated vinylmonomer or gem phosphonic acid or ester monomer with other monomers patricularly styrene, with still other monomers such as acrylate or acrylonitrile together with a cross-linking agent such as divinylbenzene. A typical monomer used for such copolymerization is vinylidene diphosphonic acid or the ester thereof to produce gem phosphonic functionality. Further examples of such polymers are polymers having a plurality of amino alkylene, phosphonic acid or phosphonate associated with the organic polymer.

As set forth above bis-derivatives are also useful including imino-bis(methylenephosphonic acid). The particularly preferred functionality is amino methylenephosphonic acid groups on polystyrene cross-linked with divinylbenzene.

As set forth above, phosphonic functionality can be incorporated into the polymer by reaction with an existing polymer matrix or by copolymerization of for example a vinyl phosphonic monomer. A prefered polymer is one containing polymerized styrene monomer either as a homo polymer or as an interpolymer with other polymerized monomeric units. Such polymers containg polymerized styrene including crosslinked polymers as one of the monomers are referred to here in as polystyrene polymers.

The organic polymers having phosphonic functionality can be combined with at least one component of an expander in the negative active material to provide improved maintenance of the lead acid batteries. Typical examples of the organic polymers having phosphonic functionality are set forth above.

The metal control additives are typically within the particle size ranges, porosities, surface areas, additive concentration and such other physical properties set forth below with respect to metal control additives. The porosity of the preferred organic polymers can vary over a wide range such as within the ranges set forth below with respect to porosity. The porosity of the preferred organic polymers is that which allows the metal impurity ion, to permeate the porous organic polymer particle thereby affording good and efficient contact with the functional phosphonic groups attached to the external and internal surfaces of theparticles. The total displacement capacity of the porous polymer is typically greater than one milliequivalent of displaceable ion per gram of polymer (dry), preferably greater than two and still more preferably greater than four.

Any suitable negative active electrode material useful in lead-acid batteries may be employed in the present invention. One particularly useful formed negative active electrode material comprises lead, e.g., sponge lead. Conventional lead paste prepared from leady oxide, sulfuric acid, water and suitable expanders can be used. A suitable expander material typically comprises an organic expander, barium sulfate and carbon black. Typically, the organic expander is a purified product in the form of a lignin sulfonic acid and is typically present at a concentration based upon the leady oxide used to form the active material of less than 2.0% typically less than 1.0 wt.%. The concentration of the expander having all components is generally in the range of from 1 to 3 wt.% basis dry leady oxide with the performance requirements of the battery being a factor in defining expander concentration in the negative plate.

Each of the cells of a lead acid battery further includes a non-electrically conductive separator acting to separate the positive and negative electrodes of the cell and to hold electrolyte. Any suitable material may be used as a separator provided that it has no substantial detrimental effect on the functioning of the cells or battery. Typical examples of separator material for batteries include glass fiber, polyvinyl chloride, polyethylene and microporous polyethylene, small pore size. Certain of these separators are formed as envelopes, with the pasted plates inside and the separator edges sealed permanently.

Metal impurities can be particularly detrimental in valve regulated lead acid batteries operating on the oxygen recombination principal, i.e. recombinant batteries. A number of impurity metals can exert a deleterious effect on the performance of recombinant batteries by for example, effecting one of more of the performance requirements of the recombinant batteries such as by increasing oxygen, evolution at the positive electrode, increasing hydrogen evolution at the negative electrode, inhibiting oxygen recombination at the negative electrode and in increasing the amount of water lost by the battery. Typical examples of metals that are particularly deleterious in recombinant batteries are arsenic, antimony, cobalt, chromium, nickel, iron, silver and tellurium.

As set forth above, the metal control additives can be incorporated directly into the active material particularly the negative active material for reducing the detrimental effects of the soluble metal impurity on the negative plates. Typically, the metal control additive for use in the negative active material has a particle top size of 95 volume% less than 100 microns preferably at least 95 volume% less than 90 microns. Typically, the 50 volume% particle size distribution is less than 75 microns, preferably less than 50 microns. The term macroporous is used in it's art recognized meaning.Preferably, the average pore size is in the range of from about 150 to about 950 angstroms with larger pore size being preferred for enhanced diffusion rates. The moisture content of the metal control additives can vary widely and are typically from about 20 to about 60 wt% more, preferably from about 35-45 wt% moisture. As set forth above, a preferred embodiment is the incorporation of both the metal control and porosity enhancing additives into the negative active material, preferably where the porosity additive has hydrophobic character. The synergistic combination provides for more rapid diffusion of metal impurity containing electrolyte to the metal control additive, thereby shifting the overall capture efficiency of the metal before it electroplates on the negative plate.

The metal control additives, as set forth above, can be associated, bound and/or encapsulated with the separator such as the glass fiber mats used in lead acid batteries or the porous polymeric separators, such as polyvinyl chloride and polyethylene. Typical concentrations of the additives on a dry basis associated with the separator is less than about 10 wt% preferably less than about 6 wt% basis the weight of the separators. The metal control additives are based on macroporous organic polymers preferably having an average particle size less than 40 microns, preferably less than 30 microns and which allow for the inhibiting effect of the additives while not detrimentally adversely effecting the flow of electrolyte from and/or through the separator to the plates.

The metal control additive, which is associated with the separator is in electrolyte fluid communication such that the metal impurity permeates and can be bound by the metal control additive. In the manufacture of the separator, the separator porosity, particularly the internal porosity is controlled to allow the metal control additive to be accessible to the electrolyte. Preferably, the internal porosity exists as open areas including channels, typically greater than 1 micron, typically within the range of from about 2 to about 8 microns. The separator manufacture is typically carried out by a first extraction process followed by an extrusion process to form the separator wherein the porosity is created typically by the combination of a filler such as silica and extraction of a diluent or plastercizer. Thus for example, a polyvinyl chloride separator can be manufactured using such polymer, the metal control additive silica and an extraction process to produce the association of the additive internally, which is accessible to the metal impurity containing electrolyte. If the pore structure is to small, such as under one micron, then the additive can be surrounded and or encapsulated, thereby minimizing and/or eliminating contact with the metal impurity containing electrolyte. It is therefore necessary that the separator have such sufficient pore size and open porosity to allow fluid communication between the metal control additive and the metal containing electrolyte.

The porosity additive for use in the negative plate can have a mean particle size, which ranges of from about 10 microns to about 100 microns, typically ranges of from about 15 microns to about 75 microns. The porosity additives can be characterized by bulk density (gm/cc) which is the weight or mass per unit volume considered only for the particle itself, i.e., includes the internal pore volume, surface area (m2/gm), total pore volume(cc/gm),pore size distribution and percent apparent porosity. In general, it is preferred that the bulk density be from about 3% to about 75% more preferably from about 10% to about 50%, more preferably, from about 10% to about 40% of the true density of the substrate material. In addition, the porosity additive can have a wide range of surface area (m2/gm) of from about 0.01 to about 100 preferably having a moderate to high surface area, preferably, from about 0.5 m2/gm to about 100 m2/gm, more preferably, from about 1 m2/gm to about 50 m2/gm.

The pore volume is preferably from about 0.4 cc/gm to about 3.5 cc/gm, or even up to about 5cc/gm, more preferably from about 0.7 cc/gm to about 4.5 cc/gm more preferably from about 0.7 cc/gm to about 3.25 cc/gm. The pore size distribution can vary over a wide range and can have various distributions including multi-modal, for example, bi-modal distribution of pores including macro pores and micro pores. There ideally exists a relationship between pore diameter, surface area and pore volume, thus fixing any two variables generally determines the third. In general, the mean (50%) pore diameter for macro pores, i.e., generally classified as having a mean pore diameter greater than about 750 angstroms can vary from about 0.075 microns to about 15microns, more preferably, from about 0.075 microns to about 12 microns.

As set forth above, the porosity additive can be inorganic for example, an inorganic oxide. Typical examples of inorganic oxides which are useful as additives include for example, those containing one or more alumino silicate, silica, titania, , as well as multi-oxide type materials such as silica alumina, zeolite modified inorganic oxides, e.g., silica alumina, silicates and mixtures thereof and the like. A particularly unique porous substrate is diatomite, a sedimentary rock composed of skeletal remains of single cell aquatic plants called diatoms typically comprising a major amount of silica. Diatoms are unicellular plants of microscopic size. There are many varieties that lives in both fresh water and salt water. The diatom extracts amorphous silica from the water building for itself what amounts to a strong shell with highly symmetrical perforations. Typically the cell walls exhibit lacework patterns of chambers and partitions, plates and apertures of great variety and complexity offering a wide selection of shapes. Since the total thickness of the cell wall is in the micron range, it results in an internal structure that is highly porous on a microscopic scale. Further, the actual solid portion of the substrate occupies only from about 10-30% of the apparent volume leaving a highly porous material for access to liquid. The mean pore size diameter can vary over a wide range and includes macroporosity of from about 0.075 microns to 10 microns with typical micron size ranges being from about 0.5 microns to about 5 microns. As set forth above, the diatomite is generally amorphous and can develop crystalline character during calcination treatment of the diatomite. For purposes of this invention, diatomite as produced or after subject to treatment such as calcination are included within the term diatomite.

The porosity additive can be a porous organic polymer such as a resilient organic porous polymer, which resists detrimental permanent deformation and maintains sufficient porosity for the sulfuric acid in the pores, has resiliency to be deformed under the conditions of discharge particularly mechanical forces in the active material of the lead acid battery and has resiliency to approach or attain its original geometry upon recharge of the battery. Typical examples of organic porosity additives are elastomeric or rubber-like porous substrates wherein the pores enhance the sulfuric acid electrolyte to contact the metal control additive. Further examples of such organic porosity additives are organic polymers including for example organic polymers selected from the group consisting of polyolefins, particularly polypropylene, polyvinyl polymers, phenol formaldehyde polymers, polyesters, polyvinylesters, cellulose and mixtures thereof. Such organic porosity additives have geometries and are typically used within the ranges as set forth above for the inorganic porosity additives.

Depending on the particular active material in which such porosity additive are incorporated, such additive can be further coated with additional components such as with other surface components which may improve overall properties such as discharge, recharge and life of the active materials.

In a still further preffered embodiment, the porosity additives can be coated with another material. One such material is a component, which gives hydrophobic character to the porous substrate, i.e. the porous substrate with the component is not water wet to the same degree as without the component. Such change to hydrophobic character can enhance the flow of electrolyte containing metal impurity within the active material by limiting the bonding of the active material to the porosity additive surfaces. A particularly preferred component is a silica based size having hydrophobic alkyl or aromatic groups such as methyl, ethyl, octyl or phenyl which provide for hydrophobic character on the surface of the porosity additive, particularly on inorganic porosity additives. Many of the organic porosity additives have inherent hydrophobic properties such as the polyolefins whereas other have a combination of hydrophilic and hydrophobic properties. As set forth above, it is preferred that the porosity additives have sufficient hydrophobic character to reduce the permanent bonding of the active material to the surfaces of the porosity additives. The reduced bonding of the active material allows for improved diffusion of the sulfuric acid electrolyte to the metal control additives associated with the negative plate.

The additives are incorporated during battery manufacture preferably during the production of the negative paste prior to application on the grid material. The additives can be incorporated into, for example, the lead, leady oxide powders to which the sulfuric acid and water are added. It is preferred that the additives be incorporated such as to provide a uniform distribution of the additive particles throughout the entire paste, active material.

The metal control and porosity additive for use in lead-acid batteries are acid resistant. That is, the substrate exhibits some resistance to corrosion, erosion, oxidation and/or other forms of deterioration and/or degradation at the conditions present, e.g., at or near the positive plate, negative plate or separator, in a lead-acid battery. Thus, the additive should itself have an . inherent degree of acid resistance. If the additive is acid resistant, the physical integrity and electrical effectiveness of the whole present battery element, is better maintained with time relative to a substrate having reduced acid resistance.

The metal control additive is typically present in a metal impurity inhibiting amount; for example, an amount of up to 5 wt.%, preferably up to 3 wt.%, of the negative plate of separator. Where present, the porosity additive is typically present in an amount of up to 5 wt.%, preferably up to 3 wt.%, of the negative plate or separator.

### EXAMPLE 1

Negative paste batches are prepared by mixing 10 lbs of a dry Barton mill leady oxide, pasting fibers, an expander comprising an organic expander (a sulfonated lignin), barium sulfate and carbon black at a concentration of 2 wt.% leady oxide at a expander weight ratio of 1.2 wt.% lignosulfinate, .4 wt% barium sulfate and 0.4 wt% carbon black basis dry leady oxide and a metal control additive at a concentration of 2 wt% basis the dry leady oxide, for approximately five minutes. The metal control additive was a macroporous organic polymer having phosphonic functionality on cross-linked polystyrene and having methylene aminomethylene phosphonic acid groups present on the aromatic rings. The average particle size was 50 microns at a 50 wt % moisture. A measured quantity of water is added to make the paste precursor and is mixed for a period of time to obtain uniform additive distribution. Pasting acid (1.375SG) is continuously added to the paste precursor at a rate of from 0.6 to 0.9ml. per second over 10 to 13 minutes. After acid addition is complete the paste batch is mixed for an additional period of time to allow the temperature to be reduced to about 110°F. Temperature of negative paste batches ranges from about 165 to about 170°F. Paste moisture and densities are obtained from the paste batch. The pastes are applied to negative grids at a constant thickness as determined by the grid thickness. Following pasting, the plates are cured in curing chambers and positive, antimony grids, and negative plates and separator are assembled into 2-volt cells. An improvement in capacity maintenance is obtained.

### EXAMPLE 2

The paste making preparation and battery assembly of Example 1 is repeated for a negative active material except the organic expander, lignosulfonate, of Example 1 is omitted from the expander. An improvement in capacity maintenance is obtained.

### EXAMPLE 3

The paste making preparation and battery assembly of Example 1 is repeated for the negative paste having a cross-linked polystyrene having amino bismethylene phosphonic acid groups. An improvement in capacity maintenance is obtained.

### EXAMPLE 4

The paste making preparation and battery assembly of Example 1 is repeated for the negative paste except that 1.5 wt% of a porous polypropylene porosity additive having 35 wt% moisture and a particle top size 95+% less than 125 microns is incorporated along with the metal control additive in the manufacture of the paste. An improvement in capacity maintenance is obtained.

### EXAMPLE 5

The paste making preparation and battery assembly of Example 1 is repeated for the negative paste except that 1.5 wt% of a hydrophobic phenyl coated inorganic diatomite porosity additive having 35 wt% moisture and a particle top size 95+% less than 125 microns is incorporated along with the metal control additive in the manufacture of the paste. An improvement in capacity maintenance is obtained.

### EXAMPLE 6

The paste making preparation and battery assembly of Example 1 is repeated except an organic polymer having a gel structure and having diphosphonic functionality is incorporated in place of the metal control additive of the invention. The structure of the diphosphonic polystyrene polymer is a gel structure as opposed to the macroporous structure of the metal control additives of examples 1 to 5. It is found that no improvement in capacity maintenance was obtained and no control of the adverse effects of the antimony deposition on the negative plate was observed.

### EXAMPLE 7

A separator battery element is manufactured from a glass-mat having a nominal thickness of 48 mils. The glass-mat and rubber separator have a mean pore diameter less than 5 microns. A powdered macroporous organic polymer having a size distribution of from 10 to 50 microns prepared from polystyrene and cross-linked with divinylbenzene having methylene aminomethylene phosphonic functional groups is sprayed onto the glass-mat in an aqueous slurry. A noninterfering polymer is incorporated into the slurry and has an electrostatic charge opposite that of the metal inhibiting polymer. The charge differences allow the formation of a porous floc on the glass-mat.

The glass-mat and a porous polyethelene sheet facing the additive side are combined by the application of an adhesive followed by mat compression. The organic polymer having phosphonic functional groups is on the interior of the glass-mat facing the inner surface of the separator. The separator is assembled into a 12-volt battery with 6% antimony grids for positive plates and negative grids containing no antimony. Trace amounts of iron and antimony on the negative plate are inhibited by the additive in the separator.

### EXAMPLE 8

A separator battery element is manufactured from polyvinylchloride having a thickness of 30 mils. The separator has a mean pore diameter of from 5 microns to 8 microns. A powdered macroporous organic polymer having a size distribution of less than 40 microns prepared from polystyrene and cross-linked with divinylbenzene having methylene aminomethylene phosphonic functional groups, is incorporated as a powder with silica pore former and formed as part of the separator. The separator is assembled into a 2-volt battery with 6% antimony grids for positive plates and negative grids containing no antimony. Trace amounts of iron are also present in the lead. The detrimental effects of iron and antimony on the negative plate is inhibited by the additive in the separator and the additive is electrolyte accessible.

### EXAMPLE 9

A separator battery element is manufactured from polyethylene having a thickness of 35 mils. The separator has a mean pore diameter less than 0.75 microns. The metal control additive of Example 8 is incorporated along with silica into the processing and a separator is formed by the extrusion process. The separators are assembled into a 2-volt battery and it is found that the metal control additive was substantially ineffective for control of the adverse effects of antimony metal deposition and was substantially inferior to the separator of Example 8. Further examination of the separator shows that the metal control additive has been substantially encapsulated by the polymer matrix and is not accessible to or in fluid communication with the metal impurity containing electrolyte.

## Claims

1. A battery element useful, in a lead acid battery which includes a sulfuric acid electrolyte, as at least a portion of the negative plate and/or as at least a separator, which element comprises, respectively, a negative active material and/or a separator interposed between a positive and negative plate and acid resistant macroporous organic polymer particles having phosphonic functional groups which have a preferential affinity over lead ion for at least one electrolyte soluble metal impurity ion more noble than lead at the discharge charge electrochemical conditions of the positive and negative plates, provided that at least a portion of said organic polymer is incorporated into said active material and/or separator and in contact with the metal impurity ion containing electrolyte to allow said ion to permeate the porous polymer.

2. An element according to claim 1 wherein the organic polymer has aminoalkylene phosphonic functional groups.

3. An element according to claim 2 wherein the organic polymer has aminomethylene phosphonic functional groups.

4. An element according to any preceding claim wherein the organic polymer is a cross-linked polystyrene and the cross-linking is by divinylbenzene.

5. An element according to any preceding claim wherein the soluble metal impurity comprises antimony, cobalt, nickel or a mixture thereof.

6. An element according to claim 5 wherein the impurity comprises antimony.

7. An element according to any preceding claim wherein the separator is a porous polymeric separator having an average pore size of from 1 to 8 µm.

8. An element according to claim 7 wherein the polymeric separator comprises polyvinylchloride.

9. An element according to any preceding claim which further has a macroporous porosity enhancing additive present in the active material which comprises an inorganic porosity additive, organic porosity additive or a mixture thereof.

10. An element according to claim 9 wherein the porosity additive comprises a diatomite inorganic porosity additive, a polypropylene porosity additive or a mixture thereof.

11. An element according to any preceding claim which further has an organic sulfonic expander additive present in the active material.

12. A battery which comprises an element according to any preceding claim and a sulfuric acid electrolyte.

13. Use of macroporous organic polymer particles having phosphonic functional groups as a metal, especially antimony, control additive in lead acid batteries.
